# EUROPEAN PATENT APPLICATION

(11) **EP 3 260 341 A1**
(43) Date of publication of application: **27.12.2017**
(21) Application number: 17176515.9
(22) Date of filing: 17.06.2017
(51) Int. Cl.: B60T 17/08

(54) **A SPRING BRAKE ACTUATOR WITH AN L-PROFILE PISTON GUIDE RING**

(30) Priority: 22.06.2016 TR 201608575
(71) Applicant: Arfesan Arkan Fren Elemanlari Sanayi Ve Ticaret A.S., 41480 Kocaeli (TR)
(72) Inventor: ARKAN, Fuat Burtan, 41480 Kocaeli (TR); BATTAL, Yavuz, 41480 Kocaeli (TR); KULAC, Ömer Faruk, 41480 Kocaeli (TR)
(74) Representative: Karaahmet, Erdogan

(57) **Abstract**

The present invention relates to the development of a guide ring for bearing the piston in diaphragm - piston spring brake actuators used in air brake systems which are present in heavy commercial vehicles such as buses, trucks, trailers, and tow trucks.

## Description

### Field of the Invention

The present invention relates to an L-profile guide ring for bearing the piston in diaphragm - piston spring brake actuators used in air brake systems which are present in heavy commercial vehicles such as buses, trucks, trailers, and tow trucks.

### Background of the Invention (Prior Art)

The present invention consists of spring brake actuators used in heavy commercial vehicles such as trucks, tow trucks, trailers, and buses; a service portion which is active under normal driving conditions; and a spring portion which is activated in case of an air leakage or air discharge (pulling the handbrake). While the service portion functions in cases when the vehicle is desired to be slowed down or stopped, the spring portion functions when the vehicle is desired to be immobilized. In other words, the service portion functions upon applying a force on the foot brake of the vehicle; on the other hand, the spring portion functions upon applying a force on the handbrake. The power spring is compressed by the air delivered to the spring chamber. The power spring is released when the air within the spring chamber is discharged, thereby providing the force required for braking. Air brake actuators are classified into two main types: service brake actuators and spring brake actuators. The spring brake actuators consist of two main types: first one of them is diaphragm - diaphragm spring brake actuators and the second one is diaphragm - piston spring brake actuators. The body mounting according to the invention relates to diaphragm - piston type spring brake actuators.

The piston guide ring used in conventional diaphragm - piston spring brake actuators of prior art is manufactured as a rectangular-profile circle. The thus manufactured piston guide ring with a circular profile is required to be cut in order to be mounted in the channel to which it is connected. The rectangular-profile circle having been cut is greased for being mounted in the piston guide ring groove. Greasing is performed in order that the guide ring will fit in its groove properly and that it will not be displaced; however, said greasing is not sufficient for the guide ring to remain in its groove stably. In addition, the guide ring may be displaced from its groove during assembly, and thus negatively affect the operation of the spring brake actuator. It is quite difficult for the operator to notice the displacement of the guide ring from its groove during assembly, and when said displacement is recognized during post-assembly performance measurements, the spring brake actuator is scrapped, thereby causing high material and labor costs. On the other hand, such a spring brake actuator which is not recognized during post-assembly measurements and then delivered to the user may break down prematurely. In some cases, even if the assembly is performed accurately, an end of the guide ring may be dislocated and get between the piston and spring body during the operation of the spring brake actuator, and thus having a negative influence on the operation of the actuator.

In the state of the art, the PCT Application Numbered WO2010066378A1 presents an exemplary application regarding the subject matter. The guide ring with a C-profile configuration mentioned in this document is connected to the sealing areas of the spring brake actuators. This PCT document discloses, apart from the piston guide ring which is manufactured and cut as a rectangular-profile circle for diaphragm - piston spring brake actuators, a piston guide ring for an alternative use in spring brake actuators, said piston guide ring having C-profile lubrication grooves and being mounted in its bearing after being cut. The guide ring serves as a bearing for the piston. As the C-profile guide ring is again used after being cut, the problem of displacement from the guide ring groove cannot be solved here.

When the documents in the state of the art and the existing applications are taken into consideration, it will be understood that there exist no applications like the present invention which discloses a spring brake actuator with an L-profile piston guide ring, wherein it is aimed that the L-profile guide ring is located in the guide ring groove disposed on the piston, without being cut and greased, such that it will not be displaced therefrom.

### Summary and Objects of the Invention

The present invention, with a view to overcome the aforementioned disadvantages and provide additional advantages in the related technical field, relates to a spring brake actuator with an L-profile piston guide ring.

The object of the invention is to provide a guide ring which is used in diaphragm - piston spring brake actuators and serves for bearing the piston.

Another object of the invention is to ensure that the guide ring is not displaced from the guide ring groove disposed on the piston.

Still another object of the invention is to enable the guide ring to be located in the guide groove and remain therein properly, with the elimination of the greasing.

Yet another object of the invention is to make the guide ring more rigid and safer, with the elimination of cutting the guide ring.

Another object of the invention is to prevent an end of the guide ring from being displaced from its groove and get between the piston and spring body during the operation of the actuator, and thus to prevent the actuator from becoming unusable prematurely.

And another object of the invention is to shorten the time required for mounting, and to lower the costs thanks to the elimination of greasing the guide piston.

### Description of the Drawings

The drawings for a better understanding of the L-profile guide ring for bearing the piston within the spring body in diaphragm - piston spring brake actuators used in air brake systems of the heavy goods vehicles such as buses, trucks, trailers, and tow trucks developed with the present invention, are described below.

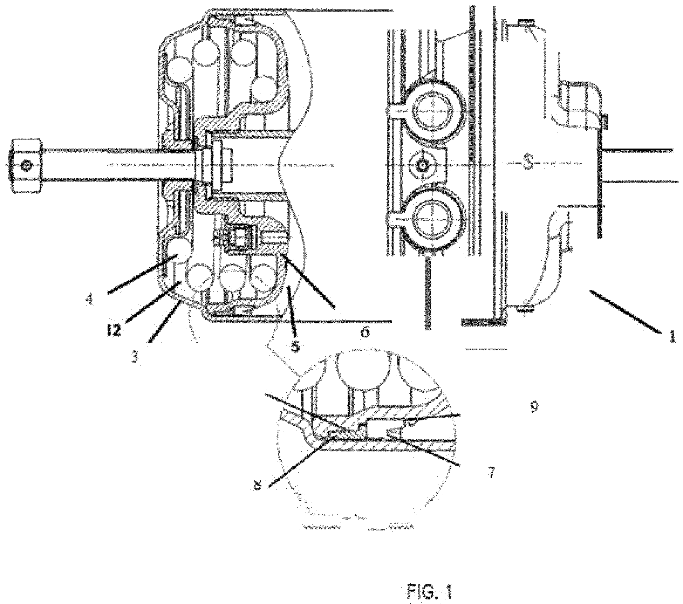

Fig. 1 - Overall View of a Spring Brake Actuator with an L-profile Guide Ring

### Description of the Part References

The parts/portions/components which are shown in the drawings illustrating a spring brake actuator with an L-profile guide ring which has been developed with the present invention for a better understanding of the invention are enumerated individually and the reference numbers corresponding thereto are given below.
**1.** Diaphragm - Piston type Spring Brake Actuator
**2.** Spring Portion
**3.** Spring Body
**4.** Power Spring
**5.** Spring Chamber
**6.** Piston
**7.** V-Ring
**8.** L-profile Guide Ring
**9.** Piston V-ring groove
**10.** Piston Guide Ring groove
**11.** Rectangular-Profile Guide Ring (Prior Art)
**12.** Power Spring chamber

### Detailed Description of the Invention

In this detailed description, the novelty according to the invention will only be described by way of illustrations in order for the subject matter to be better understood, without any limitations. Accordingly, the diaphragm - piston spring brake actuator (1) with an L-profile guide ring for bearing the piston within the spring body in diaphragm - piston spring brake actuators used in air brake systems of the heavy goods vehicles such as buses, trucks, trailers, and tow trucks, as well as the structural components constituting said diaphragm - piston spring brake actuator (1), will be described.

With reference to Fig. 1, the overall view of the diaphragm - piston spring brake actuator (1) with an L-profile guide ring which allows for bearing the piston in diaphragm - piston spring brake actuators and which is used in air brake systems of the heavy commercial vehicles such as trucks, tow trucks, trailers, and buses, is shown. The diaphragm - piston spring brake actuator (1) with an L-profile guide ring is generally characterized by comprising a spring portion (2) for stabilizing vehicles, a spring body (3) containing the power spring (4), the power spring chamber (12) and the spring chamber (5) therein, a power spring (4) which stores energy by the piston (6) being pushed by the compressed air filled into the spring chamber and transfers the stored energy to the other components for providing braking force upon the discharge of the compressed air in the spring chamber, a spring chamber (5) into which the compressed air required for compressing and releasing the power spring (4) is filled, a piston (6) which allows compressing the power spring with the compressed air in the spring chamber and when the compressed air in the spring chamber is discharged, transfers the energy stored in the power spring to the other components for conversion into braking force, a V-Ring (7) preventing the passage of the compressed air in the spring chamber (5) to the power spring chamber (12) while the vehicle is in driving position, an L-profile guide ring (8) which accommodates the piston (6), and thus permits a safer operation of the diaphragm - piston spring brake actuators (1), a piston V-ring groove (9), a piston guide ring groove (10), and a power spring chamber (12).

As illustrated in Fig. 1, first the L-profile guide ring (8) is fitted in its corresponding guide ring groove. Afterwards, the V-ring (7) is fitted in its corresponding V-ring groove. Thus, the L-profile guide ring (8) is limited by the guide ring groove below and by the V-ring (7) above. Moreover, the L-profile guide ring (8) is made of plastic in a plastic injection machine.

In line with the above explanations, the diaphragm - piston spring brake actuator (1) with an L-profile guide ring which allows for bearing the piston in diaphragm - piston spring brake actuators and which is used in air brake systems of the heavy commercial vehicles such as trucks, tow trucks, trailers, and buses, is implemented as below. When the vehicle is being driven, which represents the position of the diaphragm - piston spring brake actuator (1) with L-profile guide ring shown in Fig. 1, the spring chamber (5) included in the spring portion (2) is filled with compressed air. The compressed air filled into the spring chamber (5) provides the force keeping the power spring (4) in loaded position. When the vehicle is still in driving position, the V-ring (7) prevents the compressed air in the spring chamber (5) from passing to the power spring chamber (12) while the piston guide ring (8) serves as a bearing between the spring body (3) and piston (6). In the known state of the art, said bearing is ensured by a rectangular-profile guide ring (11) while it is provided by an L-profile guide ring (8) in the present invention. Again in the state of the art, the rectangular-profile guide ring (11) is cut after mounting the V-ring (7) in piston V-ring channel (9), and then it is located in the piston guide ring groove (10). Later, greasing is performed in order that the guide ring (11) can be properly fitted in the piston guide ring groove (10). Our invention, however, is designed such that first the L-profile guide ring (8) and the piston guide ring groove (10) will be easily mounted without having to cut the same.

Once the L-profile guide ring (8) within the diaphragm - piston spring brake actuator (1) with an L-profile guide ring is introduced into the piston guide ring channel (10), the V-ring (7) is placed in the piston V-ring channel (9). The fact that the L-profile guide ring (8) is connected to the piston guide ring groove (10) below and to the V-ring (7) above prevents it from moving and being displaced therefrom. Hence, the operation of the diaphragm - piston spring brake actuator (1) with an L-profile guide ring is made not only more stable but also safer.

## Claims

1. A diaphragm - piston spring brake actuator (1) with an L-profile guide ring which allows for bearing the piston in diaphragm - piston spring brake actuators and which is used in air brake systems of the heavy commercial vehicles such as trucks, tow trucks, trailers, and buses, **characterized in that** it comprises an L-profile guide ring (8).

2. A diaphragm - piston spring brake actuator according to Claim 1, **characterized in that** the L-profile guide ring (8) is in the form of a continuous full circle.

3. A diaphragm - piston spring brake actuator according to Claim 1, **characterized in** comprising a piston (6) having a piston guide ring channel (10) and an L-profile guide ring (8) in a way to allow the L-profile guide ring to be inserted into the piston guide ring channel without having to cut the latter.

4. A diaphragm - piston spring brake actuator according to Claim 1, **characterized in that** the L-profile guide ring (8) is connected to the piston guide ring groove (10) below and to the V-ring (7) above.
